# EUROPEAN PATENT SPECIFICATION

(11) **EP 1 628 060 B1**
(45) Date of publication and mention of the grant of the patent: **25.04.2012**
(21) Application number: 05016766.7
(22) Date of filing: 02.08.2005
(51) Int. Cl.: F16L 11/08, E21B 17/00

(54) **Marine hose**
Unterwasserschlauch
Tube flexible sous-marin

(30) Priority: 19.08.2004 JP 2004239152
(43) Date of publication of application: 22.02.2006
(73) Proprietor: THE YOKOHAMA RUBBER CO., LTD., Tokyo (JP)
(72) Inventor: Shimanoe, Satoshi, 2-1 Oiwake Hiratsuka-shi Kanagawa-ken (JP); Wakabayashi, Masahi, 2-1 Oiwake Hiratsuka-shi Kanagawa-ken (JP)
(74) Representative: HOFFMANN EITLE

(56) References cited:
- GB-A- 1 320 508
- GB-A- 1 351 602
- US-A- 3 712 841

## Description

### BACKGROUND OF THE INVENTION

The present invention relates to a marine hose, such as for use on the sea or in the sea for transferring a fluid such as crude oil.

More specifically, the marine hose is suitable for uses in which it is disposed on the sea or in the sea to connect a crude oil terminal or the like on the land to a huge tanker or the like on the berth, and is used for transferring and loading a fluid such as crude oil from the crude oil terminal or the like to the huge tanker or, on the contrary, for transferring the fluid from the huge tanker to the crude oil terminal on the land, and so forth.

Conventionally, a typical marine hose used for loading crude oil to the above-described huge tanker or the like adopts a laminated basic structure including at least an inner rubber layer, a reinforcing cord layer, and an outer rubber layer.

Specifically, the typical basic structure of the marine hose includes the inner rubber layer on an inner peripheral side, the outer rubber layer on an outer peripheral side, and the reinforcing cord layer made of a reinforcing fiber cord layer and also a wire cord layer as appropriate, which is disposed between the inner rubber layer and the outer rubber layer.

Moreover, as a marine hose of a floating type configured to float on the sea, there is known a marine hose including a floater layer as disclosed in Japanese patent application Kokai publication No. 2000 - 9267, for example.

Meanwhile, as a marine hose for use in the sea (below sea level), there is known a marine hose configured to increase a wire diameter or to include a plurality of wire reinforcing layers in light of providing pressure resistance as disclosed in Japanese patent application Kokai publication No. 2004 - 125125.

The above-described basic lamination structure of the hose to include the inner rubber layer on the inner peripheral side, the outer rubber layer on the outer peripheral side, and the reinforcing fiber layer in-between, is similarly applied to a hose used for transferring soil, powder, liquids, ready-mixed concrete, and the like. In terms of this basic structure, an abrasion-resistant hose configured to dispose polyethylene sheets on the outermost surface and the innermost surface particularly for enhancing an abrasion resistance is also known as disclosed in Japanese patent application Kokai publication No. 8(1996) - 72177.

However, particularly in the field of marine hoses for transferring mainly the crude oil, the hoses repeatedly receive rough and strong forces on the sea or in the sea such as bending forces or twisting forces attributable to waves and tides. Accordingly, deterioration continues with the duration of use of the hoses, and damage such as flaws or cracks may occur as a consequence.

Occurrence of the damage should be accurately grasped when the object of transfer is the crude oil, because even a small amount of leakage of the crude oil from the damaged portion or the like must be prevented in light of pollution control and so forth.

Particularly, the inner rubber of the marine hose often causes cracks (fracture) and the like on the rubber layer in a radial direction from an inner surface layer toward an outer periphery of the hose or often droops down in a passage inside the hose due to detachment as a result of deterioration. These problems are critical and serious as a practical matter.

Specifically, when damage such as a crack progresses and reaches the reinforcing cord layer, strength of reinforcing cords is considerably deteriorated. As a consequence, strength of the marine hose against internal pressure is considerably degraded.

In this regard, it has been conventionally recommended to inspect occurrence of cracks and the like regularly on the whole hose line of the marine hoses, and to replace the whole hose line of the marine hoses at the point when occurrence of cracks is confirmed, irrespective of an actual depth level of the occurring cracks at that point.

As a result, in general, it is a current management method to replace the plurality of marine hoses included in the hose line of the marine hoses entirely after being used for several years.

To optimize management of the duration of use of the marine hoses, it is effective to achieve a longer operating life of the marine hoses themselves and to adjust levels of occurrence of the damage such as cracks and the status of progress thereof as equal as possible among the plurality of marine hoses constituting the hose line.

Specifically, when the levels of occurrence of the damage such as cracks and the status of progress thereof can be adjusted as uniform as possible among the plurality of marine hoses or regions of the hoses, it is possible to reduce a frequency of regular inspection (to extend an interval) and to allow a result of inspection only on part of the hoses to represent the entire inspection. Accordingly, there is an advantage that it is possible to simplify the management and to perform the management more properly. Moreover, this arrangement can correspond particularly to a difference in the sea area where the hoses are used, as well as to a difference in the condition of use such as a difference between use in a floating state and use in the sea. In this way, the regular inspection to be carried out individually and properly can be rendered simpler and more appropriate.

As a matter of fact, any of the above-described patent publications have not actively pursued a marine hose or a hose configured to achieve a longer operating life of the marine hose itself and devised to adjust the levels of occurrence of the damage such as cracks and the status of progress thereof as equal as possible among the plurality of marine hoses. In other words, these patent publications have remained solely within the scope of improving structural strength of the marine hose or the hose itself. The present invention is made in view of this background.

GB 1 320 508 A; GB 1 351 602 A; and US 3 712 841 A disclose prior art hoses, but fail to disclose the characterising features of claim 1.

### SUMMARY OF THE INVENTION

According to present invention, there is provided a marine hose having at least an inner rubber layer with a breaker layer buried inside the inner rubber layer, a reinforcing cord layer, and an outer rubber layer, characterized in that: a thickness of the inner rubber layer inside the breaker layer out of a total thickness of the inner rubber layer is from 1.5 to 4 times as thick as a thickness of the inner rubber layer outside the breaker layer; the thickness of the inner rubber layer inside the breaker layer is in a range from 3 to 8 mm; and the breaker layer is made of a nylon fiber fabric having a mass per unit area in a range from 50 to 200 g/m².

It is an advantage of this configuration to provide a marine hose having a novel structure, which is configured to achieve a longer operating life of the marine hose itself and to practically adjust levels of occurrence of damage such as cracks and the status of progress thereof (as equal as possible) among a plurality of marine hoses.

With the above marine hose configuration the breaker layer of the marine hose can achieve a longer operating life of the marine hose itself and adjust levels of occurrence of damage such as cracks and the status of progress thereof among a plurality of marine hoses.

As a result, it is possible to reduce a frequency of regular inspection (to extend an interval) of a marine hose line and to allow a result of inspection only on part of the hoses to represent the entire inspection. Accordingly, it is possible to simplify management for individual regular inspection and to perform the management more properly.

That is, even when the interval of the regular inspection is set longer to some extent, it is possible to allow enough time for dealing with the result of inspection. Particularly, it is unlikely to invite a result of inspection which requires replacement of part of the marine hoses urgently, for example. In this way, it is possible to manage the operating lives for replacement appropriately on the whole.

### BRIEF DESCRIPTION OF THE DRAWINGS

To enable a better understanding of the present invention, and to show how the same may be carried into effect, reference will now be made, by way of example only, to the accompanying drawings, in which:
Fig. 1 is a schematic partial cross-sectional view of a body of a marine hose showing one representative embodiment of a structure of a marine hose; and
Fig. 2 is a partially enlarged schematic cross-sectional view showing the embodiment of the structure of the marine hose, which particularly illustrates a schematic cross-sectional structure of an inner rubber layer.

### DETAILED DESCRIPTION

Now, one specific example of a marine hose will be described further in detail with reference to the accompanying drawings.

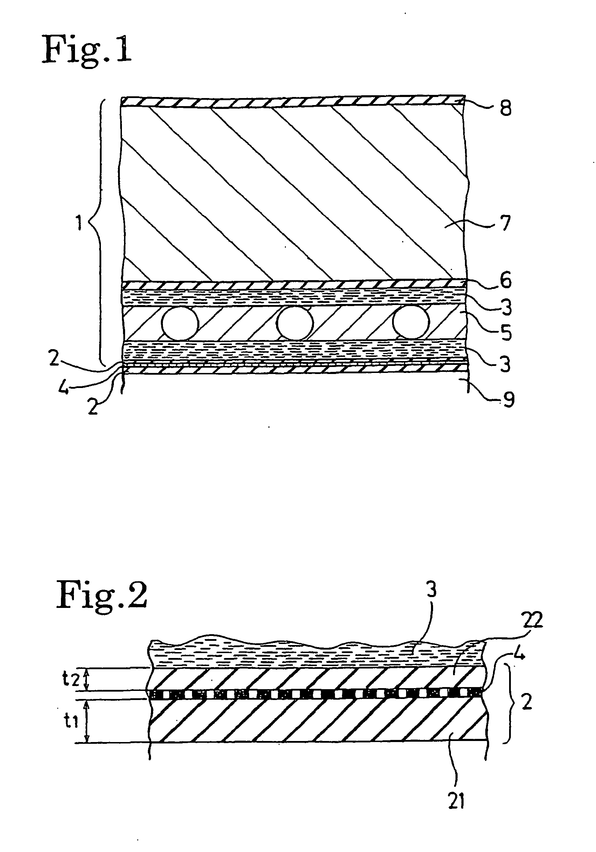

Fig. 1 is a schematic partial cross-sectional view of a body of a marine hose showing one representative embodiment of a structure of a marine hose.

In Fig. 1, a marine hose 1 is shown having a basic structure including at least an inner rubber layer 2, a reinforcing cord layer 3, and an outer rubber layer 8, in which a breaker layer 4 is buried inside the inner rubber layer 2.

In Fig. 1, reference numeral 5 denotes a wire cord layer to be provided as appropriate, reference numeral 6 denotes an intermediate rubber layer, reference numeral 7 denotes a floater layer, and reference numeral 9 denotes a hose inner hole.

In the marine hose 1 of Fig. 1, the breaker layer 4 is provided inside the inner rubber layer 2. In this way, when cracks progress in the inner rubber layer 2 from the center of the hose toward an outer periphery thereof, the marine hose 1 is configured to allow cracks to progress along an interface between the rubber in the inner rubber layer 2 and the breaker layer 4 when tips of the cracks reach the breaker layer 4 instead of progressing directly toward the outer periphery, or in other words, to allow the cracks to run in a parallel direction to an outer peripheral surface of the hose.

Therefore, when the cracks reach the interface, the progress of the cracks toward the outer periphery is temporarily stopped on the interface and is directed along the interface. In this way, this configuration provides an effect to adjust levels of progress of the cracks.

Specifically, the breaker layer 4 buried inside the inner rubber layer 2 means a structure for temporarily stopping progress of the cracks from the center of the hose toward the outer periphery thereof in the inner rubber layer 2 and for directing the progress in the direction along the interface of its own layer. Therefore, it is possible to provide some time before the cracks start progressing toward the inner rubber layer 2 existing beyond the breaker layer 4.

Fig. 2 is a partially enlarged schematic cross-sectional view showing the embodiment of the structure of the marine hose, which particularly illustrates an enlarged schematic cross-sectional structure of the inner rubber layer 2.

The inner rubber layer 2 per se includes at least three layers. Reference numeral 21 denotes the inner rubber layer inside the breaker layer 4, and reference numeral 22 denotes the inner rubber layer outside the breaker layer 4. Reference codes t₁ and t₂ shown in Fig. 2 denote a thickness of the inner rubber layer 21 inside the breaker layer 4 and a thickness of the inner rubber layer 22 outside the breaker layer 22, respectively.

The breaker layer 4 does not have to be formed as a single layer. It is also possible to form the breaker layer 4 by use of a plurality of layers.

Upon formation of this breaker layer 4, it is preferable to use a synthetic fiber fabric as a material thereof. More specifically, as a result of various studies conducted by the inventors of the present invention, the marine hose of the present invention uses a nylon fiber fabric having a mass per unit area in a range from 50 to 200 g/m². This can effectively be achieved by using similar nylon fiber knit. When forming the breaker layer 4 by use of the synthetic fiber fabric or the synthetic fiber knit, a more preferable mass per unit area ranges from 60 to 100 g/m². As for a fabric composition, a plain fabric is most preferable in light of a small directional characteristic. It is preferable to use the fabric having the smallest available directional characteristic because the fabric will not particularly hinder progress of the cracks in the direction along the interface of the breaker layer.

The synthetic fiber fabric or the synthetic fiber knit may be rubberized or not rubberized. It is preferable to rubberize the fabric or the knit uniformly in order to adjust degrees of progress of the cracks among a plurality of marine hoses. On the contrary, however, it is also possible to form imbalance actively in terms of strength by rubberizing nonuniformly based on a concept to adjust progress of the cracks by inducing the progress of cracks in the direction along the interface of the breaker layer 4 to a certain direction, for example. By applying such a structure, it might be able to carry out the regular inspection more accurately.

The fabric or the knit for constituting the breaker layer 4 may consist of one sheet or lamination of multiple sheets as appropriate. Moreover, although the fabric composition is not particularly limited when using the fabric, it is preferable to use the above-described plain fabric or a twilled fabric, for example. A rough plain fabric such as a mesh fabric is also preferable.

Meanwhile, the thickness t₁ of the inner rubber layer inside the breaker layer 4 out of a total thickness of the inner rubber layer is set to be from 1.5 to 4 times as thick as the thickness t₂ of the inner rubber layer outside the breaker layer 4 as shown in Fig. 2.

The thickness t₁ of the inner rubber layer inside the breaker layer 4 is set in a range from 3 to 8 mm. In other words, it is preferable to set the thickness t₁ of the inner rubber layer inside the breaker layer 4 almost as thick as a total thickness of an inner rubber layer of a conventional marine hose.

Meanwhile, it is not the gist of this technique to provide the thickness t₂ of the inner rubber layer 22 outside the breaker layer 4 for the purpose of putting off the cracks to progress and reach the reinforcing layer 3 by use of that thickness t₂. Accordingly, it is not always necessary to form the thick inner rubber layer 22 outside the breaker. As a result of investigation conducted by the inventors of the present invention, the inner rubber layer 22 outside the breaker only needs to have a thickness of several millimetres, namely, a thickness in a range from 1.5 to 3 mm.

By configuring the marine hose as described above, it is possible to obtain a long operating life which is at a similar level to the conventional marine hose. Moreover, progress of the cracks toward the outer periphery is temporarily stopped by provision of the breaker layer 4 in particular. Accordingly, it is possible to practically adjust levels of occurrence of the damage such as cracks and the status of progress thereof (as equal as possible) among the plurality of marine hoses.

As a result, even when an interval of regular inspection is set longer to some extent, it is possible to allow enough time for dealing with the result of inspection. Particularly, it is unlikely to invite a result of inspection which requires replacement of a portion of the marine hoses urgently, for example. In this way, it is possible to manage the operating lives for replacement appropriately on the whole.

When using the marine hose described above, it is sufficient to inspect only a limited number of marine hoses out of the plurality of marine hoses constituting a marine hose line like samples upon regular inspection.

In terms of the contents of inspection, it is practical to inspect cracks which occur on the outermost surface on the inner hole side of the inner rubber layer, and to replace all the marine hoses constituting the line upon discovery of cracks having the dimensions, width, and the like which can be empirically judged as indication of the cracks reaching the breaker layer.

Accordingly, a cycle of replacement of each of the marine hoses can be extended. Thus, it is possible to say that a longer operating life of the entire marine hose line is achieved.

A method of manufacturing the marine hose is not particularly limited. For instance, it is possible to manufacture the marine hose by sequentially winding the constituent materials of the marine hose around a mandrel, curing the constituent materials in that state, and pulling out the mandrel.

## Claims

1. A marine hose (1) having at least an inner rubber layer (2) with a breaker layer (4) buried inside the inner rubber layer, a reinforcing cord layer (3), and an outer rubber layer (8),
**characterized in that**:
a thickness (t₁) of the inner rubber layer inside the breaker layer (21) out of a total thickness of the inner rubber layer is from 1.5 to 4 times as thick as a thickness (t₂) of the inner rubber layer outside the breaker layer (22);
the thickness (t₁) of the inner rubber layer inside the breaker layer is in a range from 3 to 8 mm; and
the breaker layer is made of a nylon fiber fabric having a mass per unit area in a range from 50 to 200 g/m².

## Patentansprüche

1. Unterwasserschlauch (1) mit wenigstens einer inneren Gummischicht (2) mit einer Gürtelschicht (4), die in die innere Gummischicht eingebettet ist, einer Verstärkungskordschicht (3) und einer äußeren Gummischicht (8),
**dadurch gekennzeichnet, dass**:
eine Dicke (t₁) der inneren Gummischicht innerhalb der Gürtelschicht (21) aus einer Gesamtdicke der inneren Gummischicht zwischen 1,5 bis 4 mal so dick ist wie eine Dicke (t₂) der inneren Gummischicht außerhalb der Gürtelschicht (22);
die Dicke (t₁) der inneren Gummischicht innerhalb der Gürtelschicht in einem Bereich von zwischen 3 bis 8 mm liegt; und
die Gürtelschicht aus einem Nylonfaserstoff mit einer Masse pro Einheitsfläche in einem Bereich von 50 bis 200 g/m² hergestellt ist.

## Revendications

1. Tuyau marin (1) ayant au moins une couche intérieure en caoutchouc (2), une couche d'arrêt (4) étant noyée à l'intérieur de la couche intérieure en caoutchouc, une couche à nappe de renfort (3), et une couche externe en caoutchouc (8),
**caractérisé en ce que** :
une épaisseur (t1) de la couche intérieure en caoutchouc à l'intérieur de la couche d'arrêt (21) parmi une épaisseur totale de la couche intérieure en caoutchouc est de 1,5 à 4 fois aussi épaisse qu'une épaisseur (t2) de la couche intérieure en caoutchouc à l'extérieur de la couche d'arrêt (22);
l'épaisseur (t1) de la couche intérieure en caoutchouc à l'intérieur de la couche d'arrêt est dans une plage de 3 à 8 mm ; et
la couche d'arrêt est faite d'un tissu de fibres de nylon ayant une masse par surface unitaire dans une plage de 50 à 200 g/m².
